# EUROPEAN PATENT APPLICATION

(11) **EP 4 664 613 A1**
(43) Date of publication of application: **17.12.2025**
(21) Application number: 24823648.1
(22) Date of filing: 10.06.2024
(51) Int. Cl.: H01M 50/103, H01M 50/342, H01M 50/325, H01M 50/627, H01M 50/126, B32B 15/08, B32B 15/085

(54) **SECONDARY BATTERY**

(30) Priority: 13.06.2023 KR 20230075259
(71) Applicant: LG Energy Solution, Ltd., Seoul 07335 (KR)
(72) Inventor: YOON, Doo Han, Daejeon 34122 (KR); LEE, Jin Kyu, Daejeon 34122 (KR)
(74) Representative: Plasseraud IP
(86) International application number: PCT/KR2024/007885
(87) International publication number: WO 2024/258128

(57) **Abstract**

A secondary battery includes an electrode assembly including a plurality of unit cells stacked in a first direction, and having electrode leads at opposing ends in a second direction perpendicular to the first direction; a multifunctional terminal block (MTB) included at the opposing ends of the electrode assembly; and a laminate sheet that wraps around sides of the electrode assembly, wherein the MTB includes: an electrode terminal part electrically coupled with the electrode leads of the electrode assembly; and a rupture disk configured to rupture to discharge gas.

## Description

### [Cross-Reference to Related Applications]

This application is a national phase entry of International Application No. PCT/KR2024/007885 filed June 10, 2024, which claims the benefit of priority from Korean Patent Application No. 10-2023-0075259, filed on June 13, 2023, the disclosures of which are incorporated herein by reference in their entirety.

### [Technical Field]

The present disclosure relates to a secondary battery, and more particularly to a secondary battery that is not only advantageous for achieving large cell capacities, but also for configuring battery packs due to its high degree of freedom and compatibility, and have improved safety.

### [Background]

Unlike primary batteries, secondary batteries can be charged and discharged multiple times. Secondary batteries are widely used as an energy source for a variety of wireless devices, including handsets, laptops, and cordless vacuum cleaners. In recent years, the use of secondary batteries has shifted from mobile devices to mobility, as energy density improvements and economies of scale have dramatically reduced the manufacturing cost per unit capacity of secondary batteries and increased the range of battery electric vehicles (BEVs) to be on par with fuel vehicles.

Meanwhile, the demand for large-capacity battery packs applied to electric vehicles is increasing. Large-capacity battery packs in automobiles are required to increase safety while increasing capacity.

### [Description of the Disclosure]

### [Technical Problem]

The technical challenge of the present disclosure is to provide a secondary battery that is not only favorable for implementing large cell capacities, but also favorable for the configuration of battery packs due to its high degree of freedom and compatibility, and with improved safety.

### [Technical Solution]

To accomplish the above technical challenge, the present disclosure describes a secondary battery comprising: a stack-type electrode assembly where a plurality of unit cells is stacked in a first direction, and having electrode leads at both ends in a second direction perpendicular to the first direction; a multifunctional terminal block (MTB) provided at both ends of the stack-type electrode assembly; and a laminate sheet that wraps around the sides of the stack-type electrode assembly, wherein the MTB may include: an electrode terminal part electrically connected with the electrode leads of the stack-type electrode assembly; and a rupture disk that ruptures to discharge gas when internal pressure increases.

In some aspects, the MTB may further include a check valve, wherein the check valve may be configured to open to discharge internal gases when the internal pressure of the secondary battery is above a certain pressure, and to close again after the internal pressure is relieved.

In some aspects, the laminate sheet may at least partially cover the side of the MTB. In some aspects, the laminate sheet may be fused to the side of the MTB.

In some aspects, the MTB may further include an electrolyte inlet configured to inject electrolyte.

In some aspects, the laminate sheet may be configured to wrap around the sides of the stack-type electrode assembly by fusing together at one side of the stack-type electrode assembly after wrapping around the sides of the stack-type electrode assembly.

In some aspects, the laminate sheet may include: a flexible metal layer; an inner resin layer provided on one side of the metal layer; and an outer resin layer provided on the other side of the metal layer, wherein the inner resin layers may be fused together so that the laminate sheet wraps around the sides of the stack-type electrode assembly.

In some aspects, the inner resin layer may include casted polypropylene (CPP).

In some aspects, the inner resin layer may be fused to the sides of the MTB.

In some aspects, the MTB may further include a busbar electrically connecting the electrode leads of the stack-type electrode assembly with the electrode terminal part.

According to another aspect of the present disclosure a secondary battery may include: a stack-type electrode assembly where a plurality of unit cells is stacked in a first direction, extending in a second direction perpendicular to the first direction, and having electrode leads at ends; a multifunctional terminal block (MTB) coupled to the electrode leads of the stack-type electrode assembly; and a laminate sheet that wraps around the stack-type electrode assembly together with the MTB, wherein the MTB may include: an electrode terminal part electrically connected with the electrode leads of the stack-type electrode assembly; and a busbar electrically connecting the electrode leads and the electrode terminal part.

In some aspects, the MTB may further include an MTB housing accommodating the electrode terminal part and the busbar, the electrode terminal part may be exposed to the outside through a through-hole provided in the MTB housing.

In some aspects, the stack-type electrode assembly extends in a second direction perpendicular to the first direction, and the through-hole may be defined in an end of the MTB housing facing the second direction.

In some aspects, the laminate sheet wraps around a side of the stack-type electrode assembly and has a joint part in a third direction of the stack-type electrode assembly, wherein the laminate sheet may at least partially cover the side of the MTB.

In some aspects, the busbar may include: a center part having a planar shape configured to be in contact with the electrode terminal part, and extending horizontally in the first direction; and an edge part that bends and extends from the center part.

### [Advantageous Effects]

A secondary battery according to aspects of the present disclosure is not only advantageous for implementing large capacity cells, but also for configuring battery packs due to its high degree of freedom and compatibility, and may have improved safety.

The effects that may be obtained from the exemplary aspects of the present disclosure are not limited to those mentioned above, and other effects not mentioned may be clearly derived and understood by one of ordinary skill in the art to which the exemplary aspects of the present disclosure belong from the following description. That is, unintended effects of practicing the exemplary aspects of the present disclosure may also be derived from the exemplary aspects of the present disclosure by one of ordinary skill in the art.

### [Brief Description of the Drawings]

FIG. 1a is a perspective view illustrating a portion of a secondary battery according to one aspect of the present disclosure.
FIG. 1b is an enlarged partial perspective view of the portion of the secondary battery in FIG. 1a.
FIG. 2 is a schematic perspective view showing the laminate sheet removed from the secondary battery in FIG. 1.
FIG. 3 is a schematic diagram illustrating a cross-section of the first MTB cut through the electrode terminal part and in a plane perpendicular to the third direction.
FIG. 4 is a partially exploded perspective view illustrating how the laminate sheets of a secondary battery are coupled together, according to one aspect of the present disclosure.
FIG. 5 is a partial cross-sectional view of a laminate sheet according to one aspect of the present disclosure.
FIG. 6a is a perspective view illustrating a portion of a secondary battery according to one aspect of the present disclosure.
FIG. 6b is an enlarged partial perspective view of the portion of the secondary battery in FIG. 6a.
FIG. 7 is a side view of a secondary battery according to another aspect of the present disclosure.

### [Mode for Carrying out the Disclosure]

Hereinafter, aspects of the concept of the present disclosure will be described in detail with reference to the accompanying drawings. However, aspects of the present disclosure may be modified in many other forms, and it should not be construed that the scope of the present disclosure is limited by the aspects described below. The aspects of the concept of the present disclosure should be construed as being provided to more fully explain the inventive concept to one of ordinary skill in the art. Like designations generally refer to like elements. Furthermore, various elements and areas in the drawings are schematically depicted. Accordingly, the concept of the present disclosure is not limited by the relative sizes or spacing depicted in the accompanying drawings.

Terms such as "first," "second," and the like may be used to describe various components, but the components are not limited by such terms. These terms are used only for the purpose of distinguishing one component from another. For example, a first component may be named a second component, and vice versa, a second component may be named a first component, without departing from the scope of the concept of the present disclosure.

The terms used in this application are used to describe certain aspects only and are not intended to limit the concept of the present disclosure. Singular expressions include the plural unless the context clearly indicates otherwise. In this application, expressions such as "includes" or "has" are intended to designate the presence of the features, counts, steps, operations, components, parts, or combinations thereof described, and are not to be understood as precluding the possibility of the presence or addition of one or more other features, counts, operations, components, parts, or combinations thereof.

Unless otherwise defined, all terms used herein, including technical and scientific terms, shall have the same meaning as commonly understood by one of ordinary skill in the art to which the concept of the present disclosure belongs. It is further understood that such terms, as commonly used and as defined in dictionaries, are to be construed to have a meaning consistent with their meaning in the context of the art to which they relate, and are not to be construed in an unduly formal sense unless expressly defined herein.

When an aspect can be implemented differently, certain processes may be performed in a sequence other than that described. For example, two successively described processes may be performed substantially simultaneously, or in the opposite order from the order described.

In the accompanying drawings, variations in the depicted geometries may be expected, for example, due to manufacturing techniques and/or tolerances. Accordingly, aspects of the present disclosure should not be construed as limited to the specific geometry of the areas shown herein, and should include, for example, variations in geometry resulting from manufacturing processes. All terms "and/or" used herein include each and every combination of one or more of the components mentioned. Further, as used herein, the term "substrate" may refer to the substrate itself, or to a laminated structure including the substrate and any predetermined layers or films formed on its surface. Further, as used herein, the term "surface of the substrate" may refer to the exposed surface of the substrate itself, or to the outer surface of a predetermined layer or film formed on the substrate.

### (First aspect)

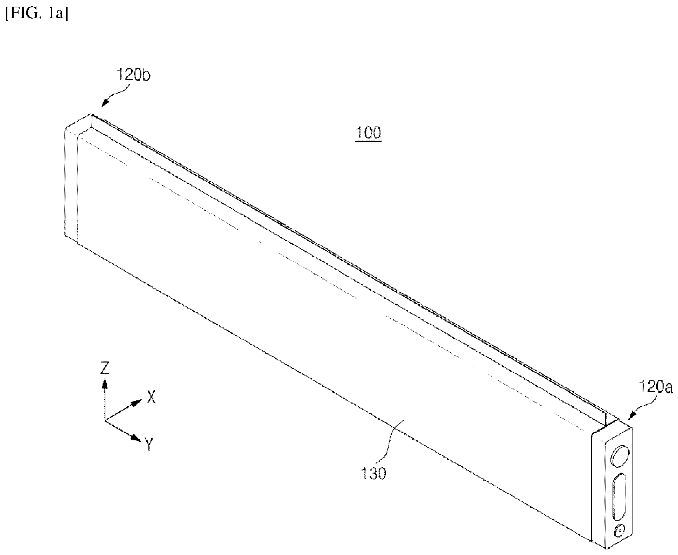

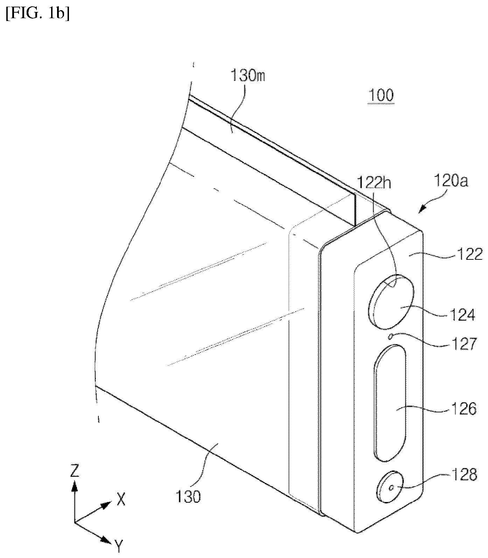

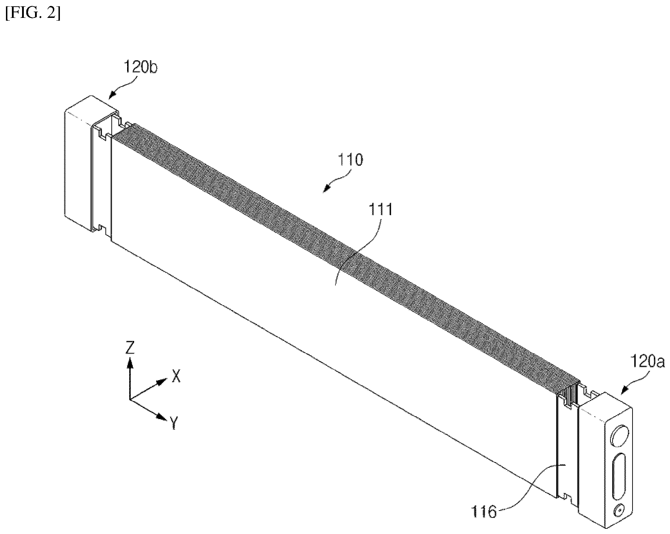

FIG. 1a is a perspective view of a portion of the secondary battery 100 according to one aspect of the present disclosure. FIG. 1b is a partial perspective view showing an enlarged view of the portion of the secondary battery 100 of FIG. 1a. FIG. 2 is a schematic perspective view illustrating a laminate sheet 130 removed from the secondary battery 100 of FIG. 1a.

In the following drawings, the secondary battery 100 is shown as defined in a vertical coordinate system defined by a first direction along the x-axis, a second direction along the y-axis, and a third direction along the z-axis, perpendicular to each other, but the first, second, and third directions only need to be relatively perpendicular to each other and are not particularly limited (e.g., may be referred to as being transverse or oblique to each other).

Referring to FIGS. 1a, 1b, and 2, the secondary battery 100 includes a stack-type electrode assembly 110, multifunctional terminal blocks (MTBs) 120a, 120b, and a laminate sheet 130.

The stack-type electrode assembly 110 may include a plurality of unit cells 111 stacked in a first direction (e.g., in the X-axis direction). Each of the unit cells 111 may be an electrode material applied to a metal foil acting as a current collector.

Each of the unit cells 111 may have a thin plate-like body extending in a second direction (e.g., in the Y-axis direction). Each of the unit cells 111 may be a positive electrode unit cell or a negative electrode unit cell. In some aspects, the plurality of unit cells 111 may be alternating stacks of one positive electrode unit cell and one negative electrode unit cell. The positive electrode unit cells and the negative electrode unit cells may be separated from each other by a separator. As such, the plurality of unit cells 111 may be formed by a repeating sequential stack of a positive electrode unit cell, a separator, a negative electrode unit cell, a separator, etc.

In some other aspects, the plurality of unit cells 111 may be a plurality of positive electrode unit cells and a plurality of negative electrode unit cells stacked alternately. The plurality of positive electrode unit cells and the plurality of negative electrode unit cells may be separated from each other by a separator. As such, the plurality of unit cells 111 may be formed by a repeating sequential stack of a plurality of positive electrode unit cells, a separator, a plurality of negative electrode unit cells, a separator, etc.

The stack-type electrode assembly 110 may have electrode leads 116 at both ends (e.g., two opposing ends) in the second direction (e.g., in the Y-axis direction). The electrode leads 116 may be electrically connected with electrode tabs of the plurality of unit cells 111. One electrode lead 116 may have one or more electrode tabs connected to it. In some aspects, two or more electrode tabs may be connected to one electrode lead 116.

In some aspects, the stack-type electrode assembly 110 may have two electrode leads 116 on one side and two electrode leads 116 on the other side. In this case, half of the plurality of unit cells 111 included in the stack-type electrode assembly 110 may be coupled to the first electrode lead on one side and coupled to the second electrode lead on the other (e.g., opposing) side. The other half of the plurality of unit cells 111 included in the stack-type electrode assembly 110 may be coupled to the third electrode lead on one side and the fourth electrode lead on the other (e.g., opposing) side. However, the present disclosure is not limited to this.

In some aspects, the stack-type electrode assembly 110 may have one or three or more electrode leads on one side. In some aspects, the stack-type electrode assembly 110 may have one or three or more electrode leads on the other side.

A first MTB 120a may be provided at one end of the stack-type electrode assembly 110 in the second direction (e.g., in the Y-axis direction) and a second MTB 120b may be provided at the other end. One of the first MTB 120a and the second MTB 120b may be electrically connected to a positive electrode side of the stack-type electrode assembly 110 and the other may be electrically connected to a negative electrode side of the stack-type electrode assembly 110. The second MTB 120b may have substantially the same configuration as the first MTB 120a, differing only in polarity. The first MTB 120a will be described below, but one of ordinary skill in the art will be able to recognize the configuration of the second MTB 120b from this.

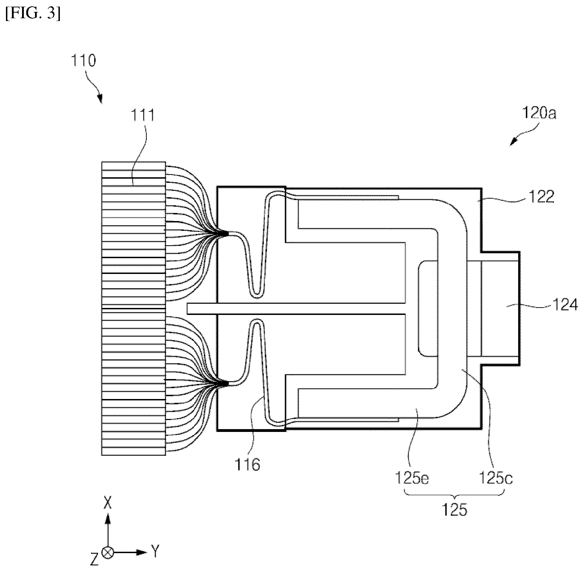

The first MTB 120a may include an MTB housing 122, an electrode terminal part 124 accommodated within the MTB housing 122, and a busbar 125 (see FIG. 3) electrically connecting the electrode terminal part 124 and the electrode leads 116.

The MTB housing 122 may be made of a material with relatively high stiffness, such as metal, and may define the appearance of the first MTB 120a. In some aspects, the MTB housing 122 may be made of aluminum (Al), nickel (Ni), iron (Fe), cobalt (Co), chromium (Cr), manganese (Mn), or an alloy containing one or more of the foregoing.

The MTB housing 122 may include a through-hole 122h exposing the electrode terminal part 124 described hereinafter. The through-hole 122h may be provided in the MTB housing 122 such that the electrode terminal part 124 is exposed facing in a second direction (e.g., in the Y-axis direction). Thus, the through-hole 122h may be defined in a plane perpendicular to the second direction (e.g., Y-axis direction) of the MTB housing 122. Furthermore, the through-hole 122h may have an opening part in the longitudinal direction of the electrode assembly 110. The shape of the through-hole 122h may be configured to conform to the outer peripheral shape of the portion of the electrode terminal part 124 exposed to the outside.

One of ordinary skill in the art will understand that the first MTB 120a may further include a through-hole for a rupture disk, a through-hole for a check valve, and a through-hole for an electrolyte inlet, as described later, as desired.

The electrode terminal part 124 is accommodated within the MTB housing 122 and may be exposed through the through-hole 122h. The electrode terminal part 124 may be made of a metal or metal alloy with low electrical resistance, such as copper (Cu), aluminum (Al), nickel (Ni), iron (Fe), platinum (Pt), manganese (Mn), or an alloy containing one or more of the foregoing.

In some aspects, the exposed surface on which the electrode terminal part 124 is exposed facing outward from the MTB housing 122 may be a plane or planar. In some aspects, the exposed surface may have a plane extending perpendicular to the second direction (e.g., in the Y-axis direction).

In some aspects, an electrically insulating spacer may be included between the electrode terminal part 124 and the MTB housing 122 such that the electrode terminal part 124 is electrically isolated from the MTB housing 122.

In some aspects, the first MTB 120a may include a rupture disk 126 configured to rupture in the event of an excessive increase in internal pressure of the secondary battery 100 (e.g., above a threshold pressure), thereby discharging the gases responsible for the excessively elevated internal pressure. The rupture disk 126 may not be restored to its original state if it ruptures due to a thermal event occurring within the interior of the secondary battery 100. The rupture disk 126 may be any rupture disk known in the art and is not particularly limited. In other examples, the rupture disk may be capable of restoring to its original state after it ruptures, such as a rupture disk having shape-memory properties.

In some aspects, the first MTB 120a may further include a check valve 128. The check valve 128 may be configured to open to discharge gases within the secondary battery 100 when the internal pressure of the secondary battery 100 becomes higher than a predetermined or threshold pressure, and to close again when the internal pressure is relieved by the discharge of the gases. The check valve 128 may be restored to its original state after discharging the internal gas, since there is no part of the check valve 128 that is ruptured by the discharge of the gas.

In some aspects, the first MTB 120a may further include an electrolyte inlet 127 through which electrolyte can be injected. In some aspects, the electrolyte inlet 127 may be provided on only one of the first MTB 120a and the second MTB 120b.

The electrolyte injected through the electrolyte inlet 127 may be any electrolyte used in conventional lithium secondary batteries, and is not particularly limited thereto.

A busbar may be further provided within the first MTB 120a. FIG. 3 is a schematic diagram illustrating a cross-sectional view of the first MTB 120a cut through the electrode terminal part 124 and in a plane perpendicular to a third direction (e.g., the Z-axis direction).

Referring to FIG. 3, the busbar 125 may be configured to be in contact with the electrode terminal part 124. The busbar 125 may be made of a metal material having a low electrical resistance. In some aspects, the busbar 125 may be made of copper (Cu), nickel (Ni), aluminum (Al), iron (Fe), cobalt (Co), platinum (Pt), molybdenum (Mo), tin (Sn), palladium (Pd), or an alloy including one or more of the foregoing.

The busbar 125 may be configured to be in contact with the electrode leads 116 of the stack-type electrode assembly 110. In some aspects, the busbar 125 may be coupled to the electrode leads 116 by welding. In some aspects, the busbar 125 may be coupled to the electrode leads 116 by fasteners, such as rivets.

In some aspects, the busbar 125 may include a planar center part 125c extending horizontally in the first direction (e.g., in the X-axis direction) and edge part 125e bent and extending from the center part 125c. The center part 125c may be configured to form a substantially U-shaped cross-sectional shape together with the edge part 125e and may extend in the third direction (e.g., in the Z-axis direction). In some aspects, the edge part 125e may have a plane extending perpendicular to the first direction (e.g., in the X-axis direction).

The busbar 125 may make a surface contact with the electrode terminal part 124 at the center part 125c. The busbar 125 may be in contact with the electrode leads 116 at the edge part 125e.

In some aspects, the electrode leads 116 may include a pre-bent portion that is bent at a portion not in contact with the busbar 125. The pre-bent portion may prevent stresses from being concentrated in certain areas of the electrode leads 116 by external forces applied to the stack-type electrode assembly 110, which may result in increased safety.

Since the secondary battery 100 of the present disclosure accommodates units with respective functions within the MTBs 120a, 120b, such as the electrode terminal part 124, the busbar 125, the rupture disk 126, the check valve 128, the electrolyte inlet 127, and the like, the battery cell itself has a function equivalent to a conventional battery module. Therefore, the secondary battery 100 of the present disclosure can have a high degree of freedom and compatibility, and is advantageous for cell-to-pack implementation.

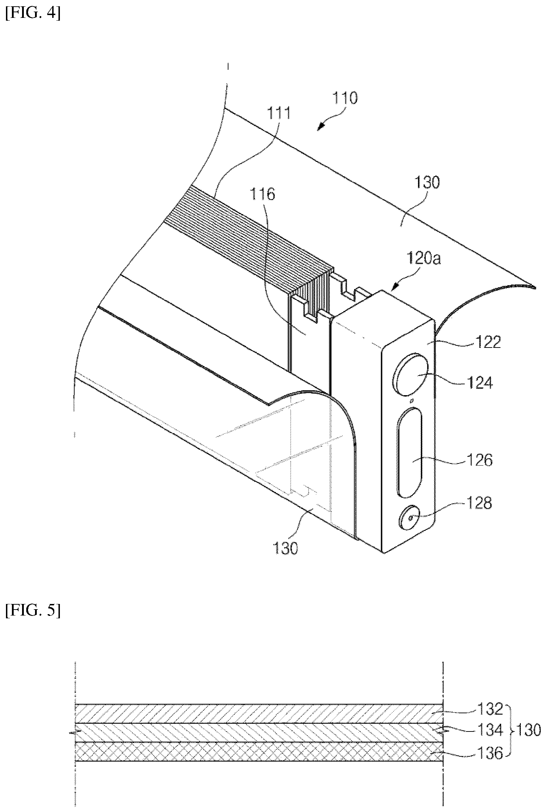

FIG. 4 is a partially exploded perspective view illustrating the coupling method of the laminate sheet 130 of the secondary battery 100, according to one aspect of the present disclosure. FIG. 5 is a partial cross-sectional view of the laminate sheet 130 according to one aspect of the present disclosure.

Referring to FIGS. 4 and 5, the laminate sheet 130 may be configured to wrap around the sides of the stack-type electrode assembly 110. In some aspects, the laminate sheet 130 may be attached to the sides of the MTBs 120a, 120b to at least partially cover the sides of the MTBs 120a, 120b. In some aspects, the laminate sheet 130 may cover the entirety of the sides extending in or parallel to the second direction (e.g., Y-axis direction) of the MTBs 120a, 120b. In some other aspects, the laminate sheet 130 may cover only a portion of the sides extending in or parallel to the second direction (e.g., Y-axis direction) of the MTBs 120a, 120b.

The laminate sheet 130 may include a flexible metal layer 134, an inner resin layer 132 provided on one side of the metal layer 134, and an outer resin layer 136 provided on the other (e.g., opposing) side of the metal layer 134.

The metal layer 134 can maintain a suitable thickness, prevent water vapor, oxygen, and other gases from infiltrating from the outside to the inside, and prevent electrolyte from leaking. In some aspects, the metal layer 134 may include one or more of, but not limited to, iron (Fe), carbon (C), chromium (Cr), manganese (Mn), nickel (Ni), aluminum (Al), and alloys thereof. When the metal layer 134 is made of an iron-containing material, mechanical strength increases, and when it is made of an aluminum material, flexibility increases, so aluminum metal foil is typically used.

The metal layer 134 may be configured to have a suitable thickness and mechanical strength such that it is relatively easily deformed by externally applied forces, and does not develop cracks or holes upon repeated deformation.

In some aspects, the metal layer 134 can have a thickness of about 20 micrometers (µm) to about 100 µm. In some aspects, the metal layer 134 may have a thickness of about 20 micrometers (µm) to about 100 µm, about 25 µm to about 95 µm, about 30 µm to about 90 µm, about 35 µm to about 85 µm, about 40 µm to about 80 µm, about 45 µm to about 75 µm, about 50 µm to about 70 µm, about 55 µm to about 60 µm, or a range between any two of these figures.

The inner resin layer 132 included on one side of the metal layer 134 may include a thermal bonding layer. In some aspects, the inner resin layer 132 may include a polyolefin-based material capable of performing a sealing action through fusion. In some aspects, the inner resin layer 132 can include a modified propylene, such as unstretched cast polypropylene (CPP), or a polypropylene-butylene-ethylene terpolymer.

The inner resin layer 132 may be formed by coating or laminating on one side of the metal layer 134.

An outer resin layer 136 included on the other (e.g., opposing) side of the metal layer 134 may serve as a base substrate and a protective layer for forming the laminate sheet 130. The outer resin layer 136 may include an insulating material such as polyethylene terephthalate (PET) or nylon.

In some aspects, the inner resin layer 132 and the outer resin layer 136 may each have a thickness of about 10 micrometers (µm) to about 50 µm. In some aspects, the respective thicknesses of the inner resin layer 132 and the outer resin layer 136 may range from about 10 micrometers (µm) to about 50 µm, about 12 µm to about 48 µm, about 15 µm to about 45 µm, about 17 µm to about 43 µm, about 20 µm to about 40 µm, about 22 µm to about 38 µm, about 25 µm to about 35 µm, about 27 µm to about 33 µm, or may range between any two of these figures.

In some aspects, an adhesive resin layer may be further included between the inner resin layer 132 and the metal layer 134 and/or between the outer resin layer 136 and the metal layer 134. The adhesive resin layer may be included for a smooth attachment between dissimilar materials. The adhesive resin layer may be formed as a single layer or as a multilayer. In some aspects, the adhesive resin layer may include a polyolefin-based resin, a polyurethane-based resin, an epoxy-based resin, or a mixture thereof.

In some aspects, the inner resin layer 132 may be fused to the sides of the MTBs 120a, 120b at both (e.g., opposing) ends in the second direction (e.g., Y-axis direction). With the inner resin layer 132 fused to and surrounding the sides of the MTBs 120a, 120b, the stack-type electrode assembly 110 may be enclosed within the secondary battery. The inner resin layer 132 may be fused onto the sides by being melted by heating and then cooled while in contact with the sides of the MTBs 120a, 120b.

The laminate sheet 130 may be fused to the sides of the MTBs 120a, 120b and to the inner resin layers 132 facing each other after adhering at a joining part 130m after surrounding the stack-type electrode assembly 110.

The joining part 130m may be located on any one side of the stack-type electrode assembly 110. In some aspects, the joining part 130m may be located in a third direction (e.g., in the Z-axis direction) of the stack-type electrode assembly 110 after surrounding the stack-type electrode assembly 110.

As described above, in the secondary battery 100 of the present disclosure, the stack-type electrode assembly 110 is surrounded by the laminate sheet 130 directly without the need for a forming process for the laminate sheet 130, thereby allowing the unit cells to be accommodated beyond the thickness defined by conventional forming processes. Thus, the secondary battery 100 of the present disclosure is advantageous for implementing large cell capacities.

### (Second aspect)

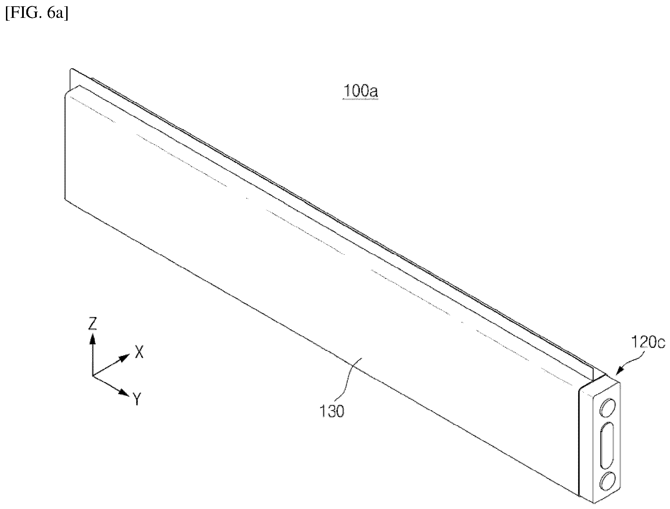

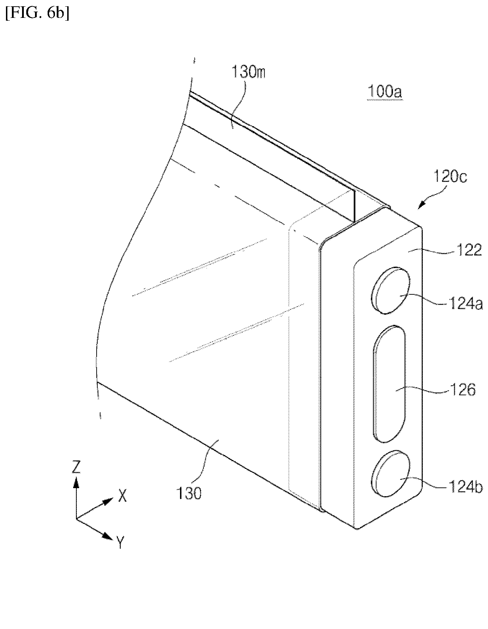

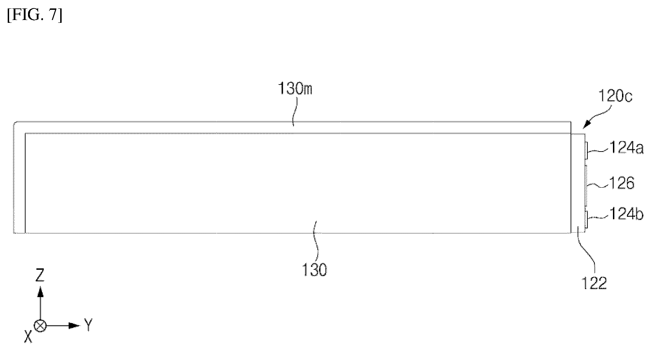

FIG. 6a is a perspective view of the most important portion of the secondary battery 100a according to another aspect of the present disclosure. FIG. 6b is a partial perspective view showing an enlarged view of a portion of the secondary battery 100a of FIG. 6a. FIG. 7 is a side view of the secondary battery 100a according to another aspect of the present disclosure.

The secondary battery 100a differs from the aspects described with reference to FIGS. 1a through 4 in that the MTB is provided on only one side of the stack-type electrode assembly extending in the second direction (e.g., in the Y-axis direction). Accordingly, the following description will focus on these differences and omit further description where there is overlap.

Referring to FIGS. 6a through 7, both electrodes of the stack-type electrode assembly are connected to the MTB 120c because the MTB 120c is included on only one side of the stack-type electrode assembly rather than both (e.g., opposing) sides of the stack-type electrode assembly. That is, only one side of the second direction (e.g., in the Y-axis direction) of the stack-type electrode assembly is provided with the MTB 120c and the other (e.g., opposing) side of the second direction (e.g., in the Y-axis direction) of the stack-type electrode assembly may extend the joining part 130m without the MTB.

Since the MTB is included on only one side of the stack-type electrode assembly, the MTB 120c includes a first electrode terminal part 124a and a second electrode terminal part 124b of different polarities. One of the first electrode terminal part 124a and second electrode terminal part 124b may be a terminal part corresponding to a cathode and the other may be a terminal part corresponding to an anode.

In FIG. 6b, a rupture disk 126 is shown included between the first electrode terminal part 124a and the second electrode terminal part 124b, but the relative positions of the first electrode terminal part 124a, the second electrode terminal part 124b, and the rupture disk 126 within the MTB 120c are not particularly limited.

The joining part 130m of the laminate sheet 130 may extend in a second direction (e.g., a Y-axis direction) on one side of the third direction (e.g., a Z-axis direction) of the stack-type electrode assembly (in FIG. 7, the top side). Further, the joining part 130m may extend from the other (e.g., opposing) side in a third direction (e.g., in the Z-axis direction). In FIG. 7, the stack-type electrode assembly is surrounded by a laminate sheet 130.

Although aspects of the present disclosure have been described in detail above, one of ordinary skill in the art to which the present disclosure belongs will be able to make many modifications to the present disclosure without departing from the spirit and scope of the present disclosure as defined in the appended claims. Accordingly, future modifications of the present disclosure will not depart from the technology of the present disclosure.

## Claims

1. A secondary battery comprising:
an electrode assembly including a plurality of unit cells stacked in a first direction, and having electrode leads at opposing ends in a second direction perpendicular to the first direction;
a multifunctional terminal block (MTB) provided at the opposing ends of the electrode assembly; and
a laminate sheet that wraps around sides of the electrode assembly, wherein
the MTB comprises:
an electrode terminal part electrically coupled with the electrode leads of the electrode assembly; and
a rupture disk configured to rupture to discharge gas.

2. The secondary battery of claim 1, wherein
the MTB further comprises a check valve configured to open to discharge internal gases when aninternal pressure of the secondary battery is surpasses a threshold pressure, and to close again after the internal gases have been discharged.

3. The secondary battery of claim 1, wherein
the laminate sheet at least partially covers a side of the MTB.

4. The secondary battery of claim 3, wherein
the laminate sheet is fused to the side of the MTB.

5. The secondary battery of claim 1, wherein
the MTB further comprises an electrolyte inlet configured to receive an injection of an electrolyte.

6. The secondary battery of claim 1, wherein
the laminate sheet is configured to wrap around the sides of the electrode assembly by fusing together at a first side of the electrode assembly after wrapping around the sides of the electrode assembly.

7. The secondary battery of claim 6, wherein
the laminate sheet comprises:
a flexible metal layer;
an inner resin layer included on a first side of the metal layer; and
an outer resin layer included on a second side of the metal layer, wherein
the inner resin layer is fused together so that the laminate sheet wraps around the sides of the electrode assembly.

8. The secondary battery of claim 7, wherein
the inner resin layer comprises casted polypropylene (CPP).

9. The secondary battery of claim 7, wherein
the inner resin layer is fused to the sides of the MTB.

10. The secondary battery of claim 1, wherein
the MTB further comprises a busbar electrically coupling the electrode leads of the electrode assembly with the electrode terminal part.

11. A secondary battery comprising:
an electrode assembly including a plurality of unit cells stacked in a first direction, extending in a second direction perpendicular to the first direction, and having electrode leads at ends thereof;
a multifunctional terminal block (MTB) coupled to the electrode leads of the electrode assembly; and
a laminate sheet that wraps around the electrode assembly together with the MTB, wherein
the MTB comprises:
an electrode terminal part electrically coupled with the electrode leads of the electrode assembly; and
a busbar electrically coupling the electrode leads and the electrode terminal part.

12. The secondary battery of claim 11, wherein
the MTB further comprises an MTB housing accommodating the electrode terminal part and the busbar,
the electrode terminal part is exposed to an outside through a through-hole defined in the MTB housing.

13. The secondary battery of claim 12, wherein
the through-hole is defined in an end of the MTB housing facing the second direction.

14. The secondary battery of claim 12, wherein
the laminate sheet wraps around a side of the electrode assembly and has a joint part in a third direction of the electrode assembly, wherein
the laminate sheet at least partially covers a side of the MTB.

15. The secondary battery of claim 11, wherein
the busbar comprises:
a center part having a planar shape configured to contact the electrode terminal part, and extending horizontally in the first direction; and
an edge part that bends and extends from the center part.
